# FASCICULE DE BREVET EUROPEEN

(11) **EP 2 203 317 B1**
(45) Date de publication et mention de la délivrance du brevet: **07.09.2011**
(21) Numéro de dépôt: 08804881.4
(22) Date de dépôt: 29.09.2008
(51) Int. Cl.: B60C 11/03, B60C 11/117

(54) **ETAT DE SURFACE D'UNE BANDE DE ROULEMENT DE PNEU**
OBERFLÄCHENZUSTAND DER LAUFFLÄCHE EINES REIFENS
SURFACE STATE OF THE TREAD OF A TYRE

(30) Priorité: 27.09.2007 FR 0706857
(43) Date de publication de la demande: 07.07.2010
(73) Titulaire: Société de Technologie MICHELIN, 63000 Clermont-Ferrand (FR); MICHELIN Recherche et Technique S.A., 1763 Granges-Paccot (CH)
(72) Inventeur: NARITA, Nobutaka, Gunma 373-8668 (JP)
(74) Mandataire: Diernaz, Christian
(86) Numéro de dépôt international: PCT/EP2008/063027
(87) Numéro de publication internationale: WO 2009/040439

(56) Documents cités:
- FR-A- 650 283
- JP-A- 10 272 905

## Description

Le domaine de l'invention concerne les bandes de roulement de pneus de véhicules de tourisme et plus particulièrement l'état de surface de la surface de roulement de telles bandes.

Le roulage hivernal sur des routes recouvertes de neige et glace requiert une bande de roulement pourvue d'un grand nombre d'arêtes et de creux afin de permettre une meilleure adhérence par le stockage et/ou l'évacuation des particules fluides ou solides présentes sur ces routes.

Par évacuation, on entend que les particules fluides ou solides sont drainées hors du contact direct entre la bande de roulement et la chaussée afm que le matériau constituant la bande de roulement soit directement en contact avec la chaussée.

Si la mise en oeuvre de moyens permettant de réaliser ce drainage après une usure initiale est possible (notamment par l'apparition sur la surface de roulement de cavités présentes initialement dans la bande), il a été constaté qu'avant d'atteindre ce premier état d'usure initiale, une bande de roulement pouvait présenter des performances inférieures.

Le document FR-A-650283 enseigne de former de petites pyramides sur l'extérieur d'une bande de roulement selon le préambule de la revendication 1, dont toute la surface interne desdites pyramides vient en contact avec le sol.

Le document JP-A-10-272905 propose une solution au problème de l'adhérence d'un pneu à l'état neuf résultant de la présence d'agent démoulant en surface du pneu en formant des trous s'évasant sur la surface.

L'objet de l'invention est en conséquence de fournir une solution technique au problème posé par une performance en adhérence ("*grip*" en anglais) insuffisante dans les premiers kilomètres de roulage d'une bande de roulement neuve.

Dans ce but, la bande de roulement pour pneu selon l'invention est pourvue d'une pluralité de rainures délimitant des blocs et/ou des nervures, ces rainures ayant une profondeur moyenne H. Cette bande de roulement a une surface radialement à l'extérieur dont une partie forme une surface de roulement prévue pour venir en contact avec la chaussée pendant le roulage. Cette surface de roulement est caractérisée en ce qu'elle n'est en contact avec la chaussée que sur une pluralité de lignes de contact en relief, ces lignes de contact en relief se croisant entre elles pour délimiter, sur la surface de roulement, une pluralité de petites cavités, c'est-à-dire de parties situées radialement l'intérieur de ladite surface de roulement. Ces cavités en retrait par rapport à la surface de roulement permettent d'accentuer de manière significative la pression de contact le long des lignes de contact. Ceci favorise l'évacuation vers les cavités des particules libres présentes sur la chaussée et est donc bénéfique pour la mise en contact du pneu avec la chaussée.

De façon avantageuse, les lignes de contact en relief sont organisées en une pluralité de premières lignes de contact et une pluralité de deuxièmes lignes de contact, les premières lignes de contact en relief étant orientées sensiblement suivant une première direction, les deuxièmes lignes de contact en relief étant orientées sensiblement suivant une deuxième direction. Les premières lignes de contact en relief coupant des deuxièmes lignes de contact en relief pour former, sur la surface de roulement, l'intersection avec ladite surface de roulement des premières cavités, chaque première cavité étant délimitée dans l'épaisseur de la bande de roulement par une paroi principale. Dans cette variante de l'invention, les premières et les deuxièmes lignes de contact peuvent suivre des tracés qui sont soit rectilignes soit non rectilignes. Ce qui est essentiel c'est que la bande de roulement ne soit en contact, au moins à de faibles charges, que sur des lignes de contact, tous les autres points de la surface de la bande de roulement étant radialement décalés vers l'intérieur (c'est-à-dire vers l'axe de rotation du pneu pourvu de la bande) afin d'amplifier la pression de contact sur ces lignes et ainsi pouvoir orienter les particules libres présentes sur la chaussée vers les cavités.

Préférentiellement, la plus grande dimension des premières cavités sur la surface de roulement est au moins égale à 0.2 mm et au plus égale à 1.5 mm pour un pneu destiné à équiper un véhicule de tourisme.

Avantageusement les profondeurs maximales des premières cavités sont au plus égales à 10% de la profondeur des rainures.

En outre, la bande de roulement selon l'invention comprend une pluralité de deuxièmes cavités de profondeur P2, chaque deuxième cavité s'ouvrant sur la paroi principale délimitant une première cavité, cette deuxième cavité étant délimitée par une deuxième paroi.

Selon cette invention, la somme des profondeurs des première et deuxième cavités est au plus égal à 20% de la profondeur H des rainures. Ainsi, il est possible de créer un volume initial approprié pour capter des particules présentes sur la chaussée sans pour autant affecter la rigidité de la bande.

De manière à ne pas trop perturber la rigidité de la bande de roulement près de la surface de roulement, il est judicieux que la surface projetée de la surface délimitant chaque deuxième cavité sur la surface de roulement soit au moins égal à 10% et au plus égal à 40% de la surface projetée des premières cavités sur la surface de roulement.

En outre, il est judicieux que l'intersection de la paroi délimitant la deuxième cavité avec la paroi principale de la première cavité soit une ligne géométrique fermée dont la longueur est différente de la longueur de la ligne géométrique d'intersection de la première cavité avec la surface de roulement.

Avantageusement, les deuxièmes cavités ont des dimensions appropriées pour contenir un corps sphérique de diamètre égal à 0.2 mm.

D'autres caractéristiques et avantages de l'invention ressortent de la description faite ci-après en référence aux dessins annexés qui montrent, à titre d'exemples non limitatifs, des formes de réalisation de l'objet de l'invention.

La figure, 1 montre une partie d'une surface de roulement d'une bande de roulement selon l'invention destinée à un pneu pour véhicule de tourisme ;

La figure 2 montre une coupe selon la ligne II-II sur la figure 2 ;

La figure 3 montre une autre variante de bande de roulement selon l'invention ;

La figure 4 montre la surface de roulement d'une bande de roulement selon l'invention destinée à un pneu pour véhicule de tourisme ;

La figure 5 montre une vue locale agrandie de la surface de roulement montrée à la figure 4 ;

La figure 6 montre une coupe selon la ligne VI-VI sur la figure 5 ;

Pour faciliter la lecture des figures et de la description associée, les mêmes références sont employées pour désigner des éléments structurels identiques quelle que soit la variante considérée.

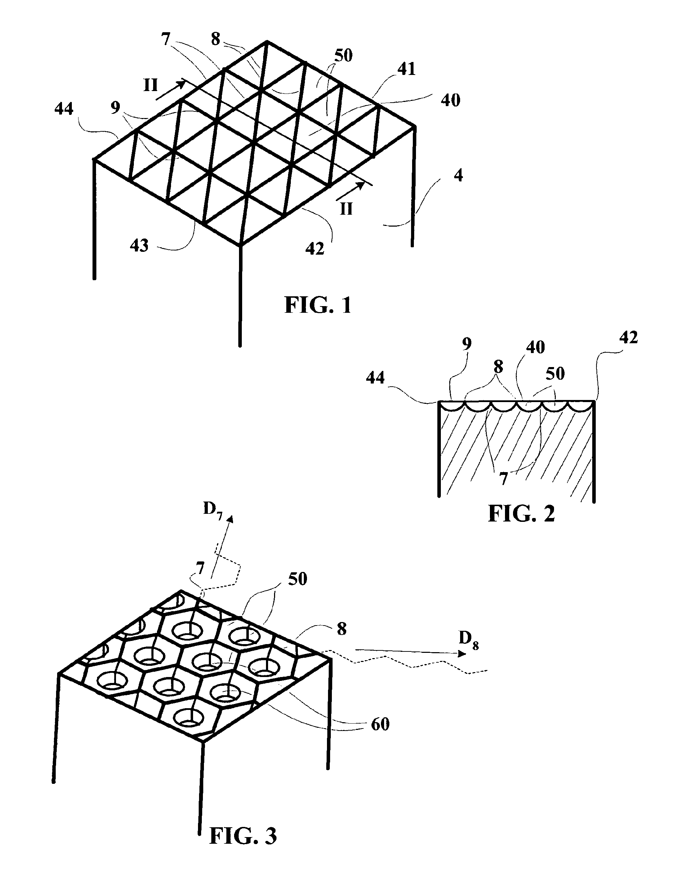

La figure 1 montre la face de contact 40 d'un élément 4 de bande de roulement de forme rectangulaire délimitée par des arêtes 41, 42, 43 et 44, cette face de contact étant destinée à venir en contact avec la chaussée pendant le roulage.

Cette face de contact comprend une pluralité de lignes de contact en relief, cette pluralité étant composée de trois séries de lignes de contact 7, 8, 9 respectivement parallèles à trois directions différentes, deux de ces directions étant parallèles aux arêtes de l'élément de bande de roulement.

Ces lignes de contact 7, 8, 9 se coupent entre elles de manière à délimiter des portions de surface de forme sensiblement triangulaire. Par ailleurs, sur chacun desdits triangles et à l'exception des points des lignes de contact, tous les autres points sont situés en retrait par rapport à la surface plane passant par les côtés dudit triangle de façon à former des sortes de petites cavités 50. De cette manière, on crée une sorte de partition de la surface externe du bloc 4 selon laquelle tous les points de cette surface à l'exception des points des lignes de contact sont décalés vers l'intérieur de la bande. Ainsi lors du roulage cet élément vient en contact sur ses lignes de contact en relief puis par une partie voire la totalité des surfaces des cavités formées.

Il est essentiel que sur la face externe de chaque élément d'une bande de roulement destinée à venir en contact avec la chaussée, il n'y ait pas de surface de contact autres que les lignes de contact (il est notamment préconisé d'éviter de faire des méplats sur les lignes de contact) pour bénéficier de l'effet technique de l'invention.

La figure 2 montre une vue en coupe de l'élément de bande de roulement de la figure 1, cette coupe étant réalisée selon la ligne de coupe II-II. On voit sur cette coupe que la face de contact 40 de l'élément de bande de roulement comprend une pluralité de cavités 50 s'ouvrant vers l'extérieur de la bande et délimitées à l'extérieur par les lignes de contact 7, 8, 9. La profondeur des cavités est ici de 0.2 mm et la longueur maxi des côtés délimitant chaque cavité sur la surface de roulement est ici de l'ordre de 1.0 mm

Dans la variante de l'invention montrée avec la figure 3, la face extérieure d'un élément de bande de roulement comprend une pluralité de première cavités 50 délimitées par des lignes de contact en relief 7 et 8. Cette face extérieure comprend une première pluralité de lignes de contact en relief de tracés non rectiligne et une deuxième pluralité de lignes de contact en relief de tracé non rectiligne. Chacune des lignes de contact 7 de la première pluralité de lignes sont orientées selon une première direction D₇. Chacune des lignes de la deuxième pluralité de lignes de contact 8 sont orientées selon une deuxième direction D₈. Outre des premières cavités 50 débouchant sur la face de contact, il est prévu des deuxièmes cavités 60 de forme cylindrique et s'ouvrant sur la paroi délimitant les premières cavités 50. Ces deuxièmes cavités sont formées pour créer une sorte de réservoir dans lequel les particules libres sur la chaussées peuvent être collectées temporairement. La profondeur totale d'une première et d'une deuxième cavité est dans le cas présent égale à 1 mm. La génération sur les lignes de contact 7 et 8 de pressions de contact augmentées par rapport aux autres points des premières cavités permet de diriger les particules libres vers les premières et deuxièmes cavités. Dans le cas de l'art antérieur la présence de surface de contact et non de lignes de contact, il n'est pas possible de diriger lesdites particules libres vers les cavités et il s'ensuit une perte de contact avec la chaussée.

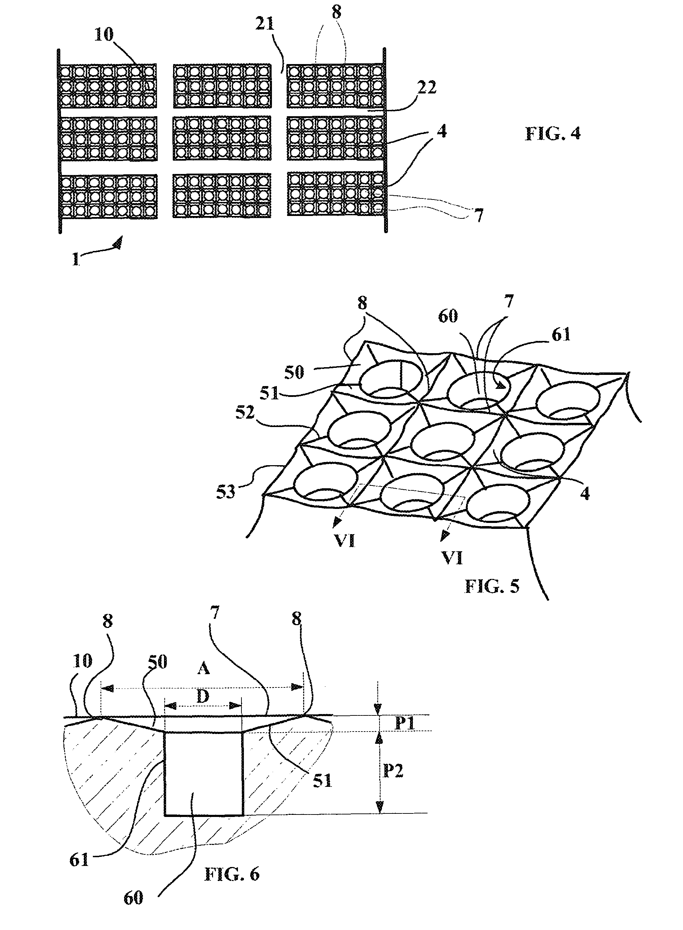

La figure 4 montre une variante de l'invention selon laquelle la surface de roulement 10 d'une bande de roulement 1 d'un pneu pour véhicule de tourisme. Cette bande de roulement 1 comprend une pluralité de rainures longitudinales 21 et transversales 22 délimitant des blocs de sculpture 4 dont l'une des surfaces orientée vers l'extérieur de la bande forme une partie de la surface de roulement 10 de ladite bande.

Ces rainures ont une profondeur moyenne H égale dans le cas présent à 5 mm.

En outre, sur cette bande de roulement 1 à l'état neuf et sur chaque bloc de sculpture 4, il a été moulé une pluralité de premières cavités 50 s'ouvrant sur la surface extérieure dudit bloc, chaque première cavité 50 étant prolongée vers l'intérieur de la bande par une deuxième cavité 60. Les intersections des premières cavités avec la surface de roulement de la bande de roulement suivent des lignes de contact 7 et 8, tous les autres points des surfaces principales des premières cavités étant situés vers l'intérieur par rapport auxdites lignes de contact. De cette façon, la surface de roulement vient en contact avec la chaussée le long des lignes de contact 7 et 8 en premier ; par la suite le contact peut se faire sur au moins une partie des parois principales des premières cavités voire sur la totalité. Ce qui est essentiel c'est que dans un premier temps le contact, établi sur les lignes de contact, génère des forces repoussant vers l'intérieur des premières cavités d'éventuelles particules libres présentes sur la chaussée.

On montre une vue agrandie d'une partie d'un bloc 4 d'une telle bande de roulement avec la figure 5, sur laquelle on distingue une pluralité de premières cavités 50 et deuxièmes cavités 60.

Comme le montre la figure 6 qui est une coupe selon la ligne VI-VI réalisée sur la figure 5, chaque première cavité 50 de profondeur P1 (égale à 0.1 mm) est délimitée par une paroi principale 51 ayant dans le cas présent la forme générale d'une pyramide tronquée. Les lignes d'intersection 52 des faces de ladite pyramide font un angle égal à 12 degrés avec la surface de roulement. La paroi principale 51 de cette première cavité 50 coupe la surface de roulement 10 selon une ligne géométrique 53 de contour fermé ayant une longueur totale **C1**. Cette ligne géométrique 53 est formée par des tronçons de premières et deuxièmes lignes de contact et est apte à exercer un effort d'accrochage du pneu sur la chaussée et sur les matériaux recouvrant la chaussée (comme de la neige). Cette ligne géométrique 53 formée par l'intersection de la paroi principale 51 de la première cavité 50 avec la surface de roulement 10 a une forme sensiblement carrée de longueur de côté A égale à 1.2 mm dans le cas présent.

Les premières cavités 50 sont formées de manière à être contiguës les unes aux autres sur chaque bloc 4 de sculpture de la bande de roulement (par contiguë, on entend ici qu'une partie d'une ligne de contact d'une première cavité est également partie d'une ligne de contact d'une autre première cavité). Grâce à cette disposition, il est possible d'améliorer l'efficacité de la collecte des particules sur la chaussée et ainsi augmenter l'efficacité des arêtes en contact avec la chaussée. Dans le cas présent, un côté d'un premier carré est également côté d'un carré adjacent au premier carré.

La fonction des premières cavités 50 est d'accroître les efforts de pression sur la ligne de contact en contact avec la chaussée tout en captant et orientant les particules libres présentes sur la chaussée vers le fond de ladite première cavité.

En outre, chaque première cavité 50 est prolongée dans l'épaisseur de la bande de roulement par une deuxième cavité 60 de profondeur P2, ici égale à 0.4 mm, s'ouvrant sur la paroi principale 51 de la première cavité 50. Cette deuxième cavité 60, jouant le rôle de réservoir pour les particules libres, est délimitée par une paroi 61 dont l'intersection avec la paroi principale 51 de la première cavité 50 est une ligne circulaire de contour fermée dont la longueur C2 est inférieure à la longueur **C1** de la ligne d'intersection 53 de la première cavité avec la surface de roulement 10.

Dans le cas présent, la deuxième cavité 60 est de forme circulaire cylindrique dont le diamètre D est égal à 0.8 mm et débouche sur le fond d'une première cavité 50. La profondeur totale (somme des profondeurs P1 et P2) des première et deuxième cavités est égale à 0.4 mm.

Afin d'optimiser la collecte de particules et leur stockage temporaire pendant le passage dans le contact avec la chaussée, il est recommandé de choisir un volume total des premières et deuxièmes cavités par unité de surface sur la surface de roulement au moins égal à 5 millimètres cube (5 mm³). Ainsi on réalise une quantité suffisante de premières cavités pour drainer les particules libres vers les réservoirs constitués par les deuxièmes cavités.

Préférentiellement, les deuxièmes cavités ont des formes quelconques de dimensions appropriées pour contenir au moins un corps sphérique de diamètre égal à 0.2 millimètres.

L'invention n'est pas limitée aux exemples décrits et représentés et diverses modifications peuvent y être apportées sans sortir du cadre défini par les revendications ci-jointes.

## Revendications

1. Bande de roulement (1) pour pneu, cette bande étant pourvue d'une pluralité de rainures (21, 22) délimitant des blocs (4) et/ou des nervures, ces rainures ayant une profondeur moyenne H, cette bande de roulement ayant une surface radialement à l'extérieur dont une partie forme une surface de roulement (10) prévue pour venir en contact avec la chaussée pendant le roulage, cette surface de roulement comprenant une pluralité de premières lignes de contact (7) et une pluralité de deuxièmes lignes de contact (8), les premières lignes de contact en relief étant orientées sensiblement suivant une première direction, les deuxièmes lignes de contact en relief étant orientées sensiblement suivant une deuxième direction, les premières lignes de contact en relief coupant des deuxièmes lignes de contact en relief pour délimiter, sur la surface de roulement, l'intersection avec ladite surface de roulement de premières cavités (50), chaque première cavité (50) étant délimitée dans l'épaisseur de la bande de roulement par une paroi principale (51), tous les points de ladite paroi principale (51), à l'exception des points des lignes de contact en relief, étant situés radialement à l'intérieur de la surface de roulement (10), cette surface de roulement étant **caractérisée en ce qu'**elle n'est en contact pendant le roulage avec la chaussée que sur une pluralité de lignes de contact (7) en relief, cette bande de roulement comprenant en outre une pluralité de deuxièmes cavités (60) de profondeur P2, chaque deuxième cavité s'ouvrant sur la paroi principale (51) délimitant une première cavité (50), cette deuxième cavité (60) étant délimitée par une deuxième paroi (61).

2. Bande de roulement (1) selon la revendication 1 **caractérisée en ce que**, la somme des profondeurs des première et deuxième cavités est au plus égal à 20% de la profondeur H des rainures (21, 22).

3. Bande de roulement (1) selon la revendication 2 **caractérisée en ce que** la surface projetée de la surface délimitant chaque deuxième cavité sur la surface de roulement est au moins égal à 10% et au plus égal à 40% de la surface projetée des premières cavités sur la surface de roulement.

4. Bande de roulement (1) selon l'une des revendications 1 à 3 **caractérisée en ce que** les deuxièmes cavités (60) ont des dimensions appropriées pour contenir un corps sphérique de diamètre égal à 0.2 mm.

5. Bande de roulement (1) selon l'une des revendications 1 à 4 **caractérisée en ce que** la plus grande dimension des premières cavités (50) sur la surface de roulement est au moins égale à 0.2 mm et au plus égale à 1.5 mm.

6. Bande de roulement (1) selon l'une des revendications 1 à 5 **caractérisée en ce que** les profondeurs maximales des premières cavités sont au plus égales à 10% de la profondeur des rainures.

## Claims

1. Tyre tread (1), this tread being provided with a plurality of grooves (21, 22) delimiting blocks (4) and/or ribs, these grooves having an average depth H, this tread having a radially exterior surface of which part forms a tread surface (10) designed to come into contact with the roadway during rolling, this tread surface comprising a plurality of first contact lines (71) and a plurality of second contact lines (72), the first contact raised lines being directed substantially in a first direction, the second contact raised lines being directed substantially in a second direction, the first contact raised lines intersecting the second contact raised lines to delimit, on the tread surface, at the intersection with the said tread surface, first cavity (50), each first cavity (50) being delimited in the thickness of the tread by a main wall (51), all the points of the said main wall (51), with the exception of the points of the contact raised lines, being situated radially on the inside of the tread surface (10), this tread surface being **characterized in that**, during running, it is in contact with the roadway only over a plurality of raised contact lines (7), this tread further comprising a plurality of second cavities (60), of depth P2, each second cavity opening onto the main wall (51) delimiting a first cavity (50), this second cavity (60) being delimited by a second wall (61).

2. Tread (1) according to Claim 1, **characterized in that** the sum of the depths of the first and second cavities is at most equal to 20% of the depth H of the grooves (21, 22).

3. Tread (1) according to Claim 2, **characterized in that** the projected area of surface delimiting each second cavity onto the tread surface is at least equal to 10% and at most equal to 40% of the projected area of the first cavities onto the tread surface.

4. Tread (1) according to one of Claims 1 to 3, **characterized in that** the second cavities (60) have dimensions suited to containing a spherical body of a diameter of 0.2 mm.

5. Tread (1) according to one of Claims 1 to 4, **characterized in that** the largest dimension of the first cavities (50) on the tread surface is at least equal to 0.2 mm and at most equal to 1.5 mm.

6. Tread (1) according to one of Claims 1 to 5, **characterized in that** the maximum depths of the first cavities are at most equal to 10% of the depth of the grooves.

## Patentansprüche

1. Laufstreifen (1) für einen Reifen, wobei dieser Streifen mit einer Vielzahl von Rillen (21, 22) versehen ist, die Blöcke (4) und/oder Rippen begrenzen, wobei diese Rillen eine mittlere Tiefe H haben, wobei dieser Laufstreifen eine radial äußere Fläche hat, von der ein Teil eine Lauffläche (10) formt, die vorgesehen ist, um beim Fahren mit der Straße in Kontakt zu kommen, wobei diese Lauffläche eine Vielzahl erster Kontaktlinien (7) und eine Vielzahl zweiter Kontaktlinien (8) enthält, wobei die ersten erhabenen Kontaktlinien im Wesentlichen gemäß einer ersten Richtung ausgerichtet sind, wobei die zweiten erhabenen Kontaktlinien im Wesentlichen gemäß einer zweiten Richtung ausgerichtet sind, wobei die ersten erhabenen Kontaktlinien zweite erhabene Kontaktlinien schneiden, um auf der Lauffläche die Schnittstelle mit der Lauffläche von ersten Hohlräumen (50) zu begrenzen, wobei jeder erste Hohlraum (50) in der Dicke des Laufstreifens durch eine Hauptwand (51) begrenzt wird, wobei alle Punkte der Hauptwand (51), mit Ausnahme der Punkte der erhabenen Kontaktlinien, sich radial innerhalb der Lauffläche (10) befinden, wobei diese Lauffläche **dadurch gekennzeichnet ist, dass** sie während des Fahrens mit der Straße nur über eine Vielzahl von erhabenen Kontaktlinien (7) in Kontakt ist, wobei dieser Laufstreifen außerdem eine Vielzahl von zweiten Hohlräumen (60) mit einer Tiefe P2 enthält, wobei jeder zweite Hohlraum sich auf die Hauptwand (51) öffnet, die einen ersten Hohlraum (50) begrenzt, wobei dieser zweite Hohlraum (60) durch eine zweite Wand (61) begrenzt wird.

2. Laufstreifen (1) nach Anspruch 1, **dadurch gekennzeichnet, dass** die Summe der Tiefen des ersten und des zweiten Hohlraums höchstens gleich 20% der Tiefe H der Rillen (21, 22) ist.

3. Laufstreifen (1) nach Anspruch 2, **dadurch gekennzeichnet, dass** die projizierte Fläche der jeden zweiten Hohlraum auf der Lauffläche begrenzenden Fläche mindestens gleich 10% und höchstens gleich 40% der projizierten Fläche der ersten Hohlräume auf der Lauffläche ist.

4. Laufstreifen (1) nach einem der Ansprüche 1 bis 3, **dadurch gekennzeichnet, dass** die zweiten Hohlräume (60) geeignete Abmessungen haben, um einen kugelförmigen Körper eines Durchmessers gleich 0,2 mm zu enthalten.

5. Laufstreifen (1) nach einem der Ansprüche 1 bis 4, **dadurch gekennzeichnet, dass** die größte Abmessung der ersten Hohlräume (50) auf der Lauffläche mindestens gleich 0,2 mm und höchstens gleich 1,5 mm ist.

6. Laufstreifen (1) nach einem der Ansprüche 1 bis 5, **dadurch gekennzeichnet, dass** die maximalen Tiefen der ersten Hohlräume höchstens gleich 10% der Tiefe der Rillen sind.
